# EUROPEAN PATENT APPLICATION

(11) **EP 1 666 146 A1**
(43) Date of publication of application: **07.06.2006**
(21) Application number: 04771566.9
(22) Date of filing: 12.08.2004
(51) Int. Cl.: B01J 35/04, B01J 27/224, B01J 37/02, B01J 37/08, B01D 53/94, C04B 35/565, C04B 41/85, B01D 39/20, B01D 46/00, F01N 3/28

(54) **SILICON CARBIDE BASED CATALYST MATERIAL AND METHOD FOR PREPARATION THEREOF**

(30) Priority: 12.08.2003 JP 2003292235
(71) Applicant: NGK INSULATORS, LTD., Nagoya-City, Aichi Pref. 467-8530 (JP)
(72) Inventor: ICHIKAWA, Shuichi, c/o NGK INSULATORS, LTD., Nagoya-shi, Aichi 4678530 (JP); UCHIDA, Yasushi, c/o NGK INSULATORS, LTD., Nagoya-shi, Aichi 4678530 (JP); KANEDA, Atsushi, c/o NGK INSULATORS, LTD., Nagoya-shi, Aichi 4678530 (JP)
(74) Representative: Paget, Hugh Charles Edward
(86) International application number: PCT/JP2004/011591
(87) International publication number: WO 2005/014171

(57) **Abstract**

The silicon carbide-based catalyst body of the present invention is a silicon carbide-based catalyst body comprising: a porous honeycomb structure wherein silicon carbide particles as the aggregate thereof are bonded to one another with pores held among them, and a catalyst loaded on the surface of the porous honeycomb structure, containing alumina and ceria as main components, wherein the catalyst is loaded on the surface of the porous honeycomb structure via a film comprising a silicon-containing oxide and the film contains oxygen in an amount of 2 to 10% by mass of the total elements constituting the porous honeycomb structure. The silicon carbide-based catalyst body is free from whitening or failure even when it is exposed to high temperatures during the regeneration or the like, and is excellent in heat resistance.

## Description

### Technical Field

The present invention to a silicon carbide-based catalyst body and a method for preparation thereof. More particularly, the present invention relates to a silicon carbide-based catalyst body comprising a silicon carbide-based, porous honeycomb structure and an alumina- and ceria-containing catalyst typified by an oxidation catalyst for purification of automobile exhaust gas, which is loaded on the silicon carbide-based, porous honeycomb structure, particularly a silicon carbide-based catalyst body excellent in heat resistance which is useful as a catalyst material for purification of particulate-containing exhaust gas emitted from diesel engine and which causes neither whitening nor failure even when exposed to high temperatures during the regeneration or the like; as well as to a method for preparation of such a silicon carbide-based catalyst body.

### Background Art

In the porous honeycomb structure constituting the above-mentioned catalyst material for purification of exhaust gas (e.g. a filter for purification of exhaust gas), cordierite has been used as the aggregate thereof. In recent years, however, non-oxide ceramics such as silicon carbide (SiC) and the like have come to be used from the standpoint of heat resistance and chemical durability.

Catalyst materials (e.g. a filter for purification of particles-containing exhaust gas emitted from diesel engine) using a porous honeycomb structure containing silicon carbide as the non-oxide ceramic aggregate thereof, are particularly useful because they can withstand high temperatures when the particulates captured thereon are burnt for regeneration of filter.

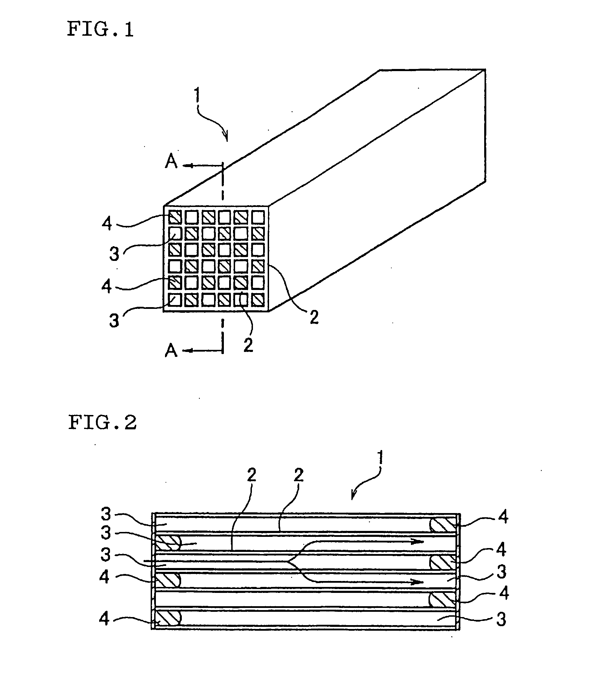

In Figs. 1 and 2 is shown an ordinary porous honeycomb structure 1 used in a DPF (diesel particulate filter) for capture of particulates contained in exhaust gas from diesel engine. The DPF is produced by assembling a plurality of porous honeycomb structures 1 in a lateral direction as well as in a horizontal direction and then cutting the resulting assembled material so as to obtain an overall external shape of circle, oval or the like.

The porous honeycomb structure (honeycomb segment) 1 has a large number of fluid passages 3 each surrounded by porous partition walls 2. The fluid passages 3 extend in the honeycomb structure 1 in its axial direction from the one end face to the other end face and, at each end face, the ends of fluid passages adjacent to one another are blocked alternately by a plugging material 4. That is, in one fluid passage 3, the left end is open and the right end is blocked by the plugging material 4; in other fluid passages 3 adjacent thereto, the left ends are blocked by the plugging material 4 and the right ends are open.

By employing such a structure, an exhaust gas enters passages having open ends at the left ends, passes through porous partition walls, and leaves from other passages having open ends at the right ends, as shown by an arrow in Fig. 2. Particulates contained in the exhaust gas are captured by the partition walls 2 when the exhaust gas passes therethrough, whereby the exhaust gas can be purified.

Incidentally, the porous honeycomb structure 1 shown in Fig. 1 has an overall shape giving a square section. However, the section may have another appropriate shape such as triangle, hexagon or the like. Further, the fluid passages 3 shown in Fig. 1 have a square sectional shape, but the sectional shape may be other shape such as triangle, hexagon, circle, eclipse or the like.

In order to burn the captured particulates to regenerate and return the filter to its original state, there is used a so-called catalyst loading method of using a filter comprising a porous honeycomb structure and an oxidation catalyst loaded on the surface thereof for promotion of particulates combustion. As the oxidation catalyst used in the method, there are used particles of noble metal (e.g. platinum) as a catalyst, a powder of alumina, zirconia, rare earth element or alkaline earth metal as a base material for dispersing therein the noble metal particles, and an oxide (e.g. ceria) fine powder as a co-catalyst.

As a conventional catalyst material wherein such an oxide catalyst is loaded on the surface of a silicon carbide structure which is an aggregate, there is known a catalyst material comprising a porous silicon carbide sintered material formed in a honeycomb structure and a silica film for catalyst loading, formed in the pores of the honeycomb structure, wherein the oxygen content in the porous silicon carbide sintered material (honeycomb structure) containing the silica film is controlled at 0.005 to 2% by mass (reference is made to Patent Literature 1).

There is also known a catalyst material comprising a porous silicon carbide sintered material formed in a honeycomb structure and a silica film for increased strength, formed in the pores of the honeycomb structure, wherein the oxygen content in the porous silicon carbide sintered material (honeycomb structure) containing the silica film is controlled at 1 to 10% by mass (reference is made to Patent Literature 2).

There is further known a catalyst material comprising silicon carbide particles as an aggregate and a metallic silicon as a binder, wherein a phase containing oxygen in an amount of 0.03 to 15% by mass is formed at the surface or periphery of the silicon carbide particles and the metallic silicon (reference is made to Patent Literature 3).

Patent Literature 1: Patent No. 2731562
Patent Literature 2: JP-A-2000-218165
Patent Literature 3: JP-A-2002-154882

Conventional catalyst materials (e.g. filter), however, have had a problem that they cause color change or failure when they are regenerated in a state that an excessive amount of soot has been accumulated on the porous honeycomb structure and therefore they are exposed to too high temperatures.

The present inventors found that the above problem arises exceptionally only when the porous honeycomb structure is constituted by non-oxide ceramics such as silicon carbide and metallic silicon. The present inventors also found that when a porous honeycomb structure made of silicon carbide and metallic silicon is loaded with a catalyst containing alumina and ceria as main components and when the resulting honeycomb structure is subjected to combustion of soot in a state that an excessive amount of soot has been accumulated thereon and the resulting temperature increase and soot combustion causes reduction to lower the oxygen concentration to about 1% or less, no silica film as a protective film is formed on the surface of the porous honeycomb structure made of silicon carbide and metallic silicon and a active oxidation reaction takes place to oxidize the surface of the porous honeycomb structure violently.

With the occurrence of the active oxidation reaction, there have been cases that the temperature inside the porous honeycomb structure reaches high temperatures of 1,700°C or more owing to the heat generated by the oxidation reaction and such a temperature rise invites the failure of the porous honeycomb structure.

The above oxidation reaction is not a reaction in which SiC is oxidized to form a SiO₂ solid film on the surface of the porous honeycomb structure, but a reaction in which a SiO gas is generated as shown in the following formulas (1) and (2).

SiC (solid) + O₂ (gas) = SiO (gas) + CO (gas) (1)

Si (solid) + O₂ (gas) = SiO (gas) + 1/20₂ (gas) (2)

The SiO gas generated combines with oxygen present in the atmosphere, to form a SiO₂ fiber and the fiber deposits on the surface of the porous honeycomb structure. Therefore, the portion of the porous honeycomb structure where such an oxidation reaction has taken place, becomes white owing to the generated SiO₂ fiber.

In this case, alumina and ceria function so as to lower the temperature at which the oxidation of SiC [the above formula (1)] and Si [the above formula (2)] takes place. The reason thereof is not made clear; however, it is considered that a chemical interaction between the SiO (gas) in the above formulas (1) and (2) and the catalyst components (alumina and ceria) has an influence on the above temperature lowering.

The present invention has been made in order to alleviate the above-mentioned problems of the prior art. The present invention aims at providing a silicon carbide-based catalyst body comprising a silicon carbide-based honeycomb structure and an alumina- and ceria-containing catalyst loaded thereon, which causes neither whitening nor failure even when exposed to high temperatures during the regeneration or the like and is excellent in heat resistance; and a method for preparation thereof.

### Disclosure of the Invention

In order to achieve the above aim, the present invention provides the following silicon carbide-based catalyst body and the following method for preparation thereof.

[1] A silicon carbide-based catalyst body comprising:
a porous honeycomb structure wherein silicon carbide particles as the aggregate thereof are bonded to one another with pores held among them, and
a catalyst loaded on the surface of the porous honeycomb structure, containing alumina and ceria as main components,
characterized in that the catalyst is loaded on the surface of the porous honeycomb structure via a film comprising a silicon-containing oxide and that the film contains oxygen in an amount of 2 to 10% by mass of the total elements constituting the porous honeycomb structure.

By employing such a constitution, the violent oxidation reaction at the surface of the porous honeycomb structure during the regeneration or the like is suppressed and there can be obtained a silicon carbide-based catalyst body which is free from whitening or failure even when exposed to high temperatures and is excellent in heat resistance.

[2] A silicon carbide-based catalyst body according to [1], wherein the film contains alumina and/or zirconia as the element (elements) thereof.

By employing such a constitution, the heat resistance of the film can be enhanced further and the heat resistance of the whole silicon carbide-based catalyst body can be enhanced further.

[3] A silicon carbide-based catalyst body according to [1] or [2], characterized in that the film contains, as the crystalline phase thereof, at least one member selected from the group consisting of cristobalite, zircon and mullite.

By employing such a constitution, the heat resistance of the film can be enhanced further and the heat resistance of the whole silicon carbide-based catalyst body can be enhanced further.

[4] A silicon carbide-based catalyst body according to any of [1] to [3], characterized in that the silicon carbide particles are bonded by metallic silicon as the binder thereof.

By employing such a constitution, the metallic silicon which functions as a binder for the silicon carbide particles as an aggregate, causes, similarly to the silicon carbide, an oxidation reaction during the regeneration or the like of the silicon carbide-based catalyst body, which suppresses the violent oxidation reaction at the surface of the porous honeycomb structure; as a result, the silicon carbide-based catalyst body causes neither whitening nor failure.

[5] A method for preparing a silicon carbide-based catalyst body, characterized by extruding a raw material containing silicon carbide particles to obtain a honeycomb structure, firing the honeycomb structure, then subjecting the fired honeycomb structure to a heat treatment in an oxygen-containing atmosphere to obtain a porous honeycomb structure, and loading, on the surface of the porous honeycomb structure, a catalyst containing alumina and ceria as main components.

By employing such a constitution, a silicon carbide-based catalyst body with enhanced heat resistance can be obtained.

[6] A method for preparing a silicon carbide-based catalyst body according to [5], wherein the heat treatment is conducted in an atmosphere containing oxygen and steam.

By employing such a constitution, the formation of an oxide film on the surface of the porous honeycomb structure can be promoted and there can be obtained a silicon carbide-based catalyst body further enhanced in heat resistance.

[7] A method for preparing a silicon carbide-based catalyst body according to [5] or [6], wherein the heat treatment is conducted by a burner heating using natural gas as a fuel.

By employing such a constitution, the formation of an oxide film on the surface of the porous honeycomb structure can be promoted and there can be obtained a silicon carbide-based catalyst body further enhanced in heat resistance.

[8] A method for preparing a silicon carbide-based catalyst body according to any of [5] to [7], wherein the heat treatment is conducted at a temperature of 800 to 1,400°C.

By employing such a constitution, it becomes possible to form an oxide film capable of sufficiently functioning as a protective film (capable of well suppressing the oxidation reaction between the silicon carbide and the catalyst component) and also to suppress a rise in pressure loss, and there can be obtained a silicon carbide-based catalyst body further enhanced in heat resistance.

[9] A method for preparing a silicon carbide-based catalyst body, characterized by extruding a raw material containing silicon carbide particles to obtain a honeycomb structure, subjecting the honeycomb structure to binder removal and then to a heat treatment, in an oxygen-containing atmosphere, then firing the resulting honeycomb structure to obtain a porous honeycomb structure, and loading, on the surface of the porous honeycomb structure, a catalyst containing alumina and ceria as main components.

By employing such a constitution, a silicon carbide-based catalyst body with enhanced heat resistance can be obtained.

[10] A method for preparing a silicon carbide-based catalyst body according to [9], wherein the heat treatment is conducted at a temperature of 400 to 1,000°C.

By employing such a constitution, it becomes possible to form an oxide film capable of sufficiently functioning as a protective film and also to suppress a rise in pressure loss, and there can be obtained a silicon carbide-based catalyst body further enhanced in heat resistance.

### Brief Description of the Drawings

Fig. 1 is a perspective view schematically showing an embodiment of the porous honeycomb structure used in the present invention.
Fig. 2 is a sectional view taken at the line A-A in the embodiment of the porous honeycomb structure shown in Fig. 1.

In Figs. 1 and 2, 1 is a porous honeycomb structure; 2 is a partition wall; 3 is a fluid passage; and 4 is a filler.

### Best Mode for Carrying Out the Invention

The silicon carbide-based catalyst body of the present invention comprises a porous honeycomb structure and a catalyst loaded on the surface of the porous honeycomb structure. The porous honeycomb structure has such a constitution that a large number of silicon carbide particles as the aggregate thereof are bonded to one another with pores held among them.

The catalyst contains alumina and ceria as main components. The catalyst may contain, besides alumina and ceria, other components such as noble metal, alkaline earth metal and the like. The catalyst is loaded on the surface of the porous honeycomb structure via a film containing a silicon-containing oxide, and the film contains oxygen in an amount of 2 to 10% by mass of the total elements constituting the porous honeycomb structure.

In the porous honeycomb structure, the silicon carbide particles may be bonded to one another directly or in a state that a binder other than silicon carbide is interposed among the silicon carbide particles. As such a binder, there can be mentioned, for example, glass, silicon oxide, metallic silicon, silicon nitride and clay. Of these, metallic silicon is preferred because it can give rise to an oxidation reaction similarly to silicon carbide.

The oxygen content in the film is 2 to 10% by mass, preferably 3.5 to 8% by mass of the total elements constituting the porous honeycomb structure. When the oxygen content is less than 2% by mass, there is no formation of an oxide film in an amount capable of sufficiently functioning as a protective film. When the oxygen content is more than 10% by mass, the amount of oxide film formed is too large and there occur a reduction in porosity and an increase in pressure loss (which is an important property when the catalyst material is used as a DPF).

The film is preferred to contain alumina and/or zirconia as the elements thereof. Further, the film is preferred to contain, as the crystalline phase thereof, at least one member selected from the group consisting of cristobalite, zircon and mullite. By containing such a substance, the film can have even higher heat resistance. That is, while the melting point of silica is about 1,730°C, the melting point of mullite (which is a reaction product of silica and alumina) is 1,850°C and the melting point of zircon (which is a reaction product of silica and zirconia) is about 2,550°C; therefore, the film can have higher heat resistance.

The method for preparing a silicon carbide-based catalyst body according to the present invention is characterized by extruding a raw material containing silicon carbide particles to obtain a honeycomb structure, firing the honeycomb structure, then subjecting the fired honeycomb structure to a heat treatment in an oxygen-containing atmosphere to obtain a porous honeycomb structure, and loading, on the surface of the porous honeycomb structure, a catalyst containing alumina and ceria as main components. In the method, the heat treatment may be conducted continuously in the same furnace in the course of cooling temperature after the firing, or may be conducted in a separate furnace for the fired material (the porous honeycomb structure) taken out of the furnace where the firing has been conducted.

The heat treatment after the firing is preferred to be conducted at temperatures of 800 to 1,400°C. When it is conducted at less than 800°C, there may be no formation of an oxide film in an amount capable of sufficiently functioning as a protective film. When it is conducted at more than 1,400°C, the amount of the oxide film formed is too large and there may occur a reduction in porosity and an increase in pressure loss (which is an important property when the catalyst material is used as a DPF).

Preferably, the heat treatment is conducted in an atmosphere containing oxygen and steam in given amounts [e.g. about 2 to 20% by volume (oxygen) and about 5 to 30% by volume (steam)], for promotion of oxide film formation.

Such a heat treatment is preferably conducted by burner combustion and heating using natural gas (which is a hydrocarbon composed mainly of methane) because the combustion of hydrocarbon can produce an atmosphere containing given amounts of oxygen and steam and can give a energy cost lower than when an electric furnace is used.

The firing may be conducted by switching from an inert gas atmosphere to an oxygen atmosphere in the course of cooling temperature from the highest temperature.

The method for preparing a silicon carbide-based catalyst body according to the present invention may also be characterized by extruding a raw material containing silicon carbide particles to obtain a honeycomb structure, subjecting the honeycomb structure to binder removal and then to a heat treatment, in an oxygen-containing atmosphere, then firing the resulting honeycomb structure to obtain a porous honeycomb structure, and loading, on the surface of the porous honeycomb structure, a catalyst containing alumina and ceria as main components.

In this method, the heat treatment is conducted preferably at temperatures of 400 to 1,000°C. When the heat treatment temperature is less than 400°C, there may be no formation of an oxide film capable of sufficiently functioning as a protective film. When the heat treatment temperature is more than 1,000°C, the amount of the film formed on the surface of silicon carbide particles before firing is too large, which may impair sintering.

### Examples

The silicon carbide-based catalyst body and method for preparation thereof according to the present invention are described more specifically below, by way of Examples.

Ceramic raw materials, i.e. a SiC powder having an average particle diameter of 48 µm and a metallic Si powder were mixed at a mass ratio of 80:20. Thereto was added starch as a pore former. There were further added methyl cellulose and hydroxypropoxyl methyl cellulose, a surfactant and water. They were kneaded using a vacuum pug mill to produce a plastic puddle.

The puddle was subjected to extrusion to obtain a honeycomb structure. The honeycomb structure was dried using a microwave and hot air to obtain a honeycomb formed material having a partition wall (partition wall 2 in Fig. 2) thickness of 310 µm, a cell density of 46.5 cells /cm² (300 cells/in.², a square section of 35 mm x 35 mm and a length of 152 mm. The formed material was subjected to debinding at 400°C in the atmosphere and then fired at about 1,450°C in an Ar inert atmosphere to obtain a porous honeycomb structure (honeycomb segment) made of SiC bonded with Si.

The honeycomb segment was measured for average pore diameter by mercury porosity, as wall as for porosity by the Archimedes method. As a result, the honeycomb segment was a carrier having a porosity of 52% and an average pore diameter of 20 µm. This honeycomb segment is termed "base material A".

A SiC powder having an average particle diameter of 12 µm as a ceramic raw material, iron oxide and yttrium oxide each as a sintering aid, methyl cellulose as an organic binder, starch as a pore former, a surfactant and water were kneaded by a vacuum pug mill to produce a plastic puddle.

The puddle was subjected to extrusion to obtain a honeycomb structure. The honeycomb structure was dried using a microwave and hot air to obtain a honeycomb formed material having a partition wall thickness of 310 µm, a cell density of 46.5 cells /cm² (300 cells/in.²), a square section of 35 mm x 35 mm and a length of 152 mm. The formed material was subjected to debinding at 550°C in the atmosphere and then fired at 2,300°C in an Ar inert atmosphere to obtain a porous honeycomb structure (honeycomb segment) made of recrystallized SiC.

The honeycomb segment was measured for average pore diameter by mercury porosity, as wall as for porosity by the Archimedes method. As a result, the honeycomb segment was a carrier having a porosity of 42% and an average pore diameter of 10 µm. This honeycomb segment is termed "base material B".

Next, the base materials A and B produced above were subjected to a heat treatment by a method shown in Table 1, to form a film (an oxide film) on the surface.

In Examples 1 to 6, 13, 14, 18 and 19, the heat treatment was conducted, as shown in the following (1) and (2), by either of a method of conducting a heat treatment after firing (expressed as "After firing" in the column of "Heat treatment step" of Table 1) and a method of conducting a heat treatment after debinding but before firing (expressed as "After debinding" in the column of "Heat treatment step" of Table 1).

(1) A method of conducting a heat treatment after firing:
A method in which, after debinding, firing is conducted in an Ar atmosphere and then a heat treatment is conducted (Examples 1 to 6, 18 and 19).

(2) A method of conducting a heat treatment after debinding but before firing:
A method in which, after debinding, a heat treatment is conducted, and then firing is conducted in an Ar atmosphere (Examples 13 and 14).

In Example 15, the heat treatment was conducted by subjecting air to bubbling using a wetter and sending an air containing water vapor (steam) into a furnace for heat treatment [expressed as "Steam blowing" in the column of "Heat treatment conditions (temp. and time)" of Table 1].
The heater temperature of the wetter was 40°C.

In Examples 16 and 17, the heat treatment was conducted by burner combustion and heating using LNG (liquefied natural gas) as a fuel (expressed as "Burner combustion" in the column of "Heat treatment conditions (temp. and time)" of Table 1]. The air and fuel ratio was about 1.2 in the highest temperature range.

In Examples 7 to 9, the heat treatment was conducted after pre-coating of sol (expressed as "ZrO₂" or "Al₂O₃" in the column of "Pre-coating" of Table 1). That is, in Examples 6 to 8, the base material A was dipped in an alumina sol (nitric acid solution) or a zirconia sol (nitric acid solution) (as necessary, further in a silica sol) for wash coating. The amount of coating was 30 g/liter. Then, baking was conducted at a temperature shown in Table 1. After this baking, a heat treatment was conducted at a temperature shown in Table 1. After the firing, the crystalline phase formed was identified by X-ray diffraction, which confirmed formation of zircon in Examples 7 and 8 and formation of mullite in Example 9. That is, in Examples 7 to 9, the treatment was conducted according to the following procedure. Debinding was conducted; then, firing was conducted in an Ar atmosphere; thereafter, a sol was pre-coated; and a heat treatment was conducted.

In Examples 10 to 12, a precursor was added to the raw materials and the heat treatment was conducted (expressed as "ZrO₂" or "Al₂O₃" in the column of "Addition to raw material(s)" of Table 1). That is, in the step of production of base material A, zirconia or alumina was added to raw materials in an amount of 5% by mass; firing was conducted; then, a heat treatment was conducted at a temperature shown in Table 1. After the firing, the crystalline phase formed was identified by X-ray diffraction, which confirmed formation of zircon in Examples 10 and 11 and formation of mullite in Example 12.

In Comparative Example 1, only firing was conducted to the base material A and no heat treatment was conducted. In Comparative Examples 2 to 4, the heat treatment was conducted at a temperature shown in Table 1, according to the method of conducting a heat treatment after firing (Comparative Examples 2 and 3) or the method of conducting a heat treatment after debinding but before firing (Comparative Example 4). In Comparative Example 5, only firing was conducted to the base material B and no heat treatment was conducted.

A film was formed by the above-mentioned heat treatment; after which alumina and ceria were loaded on the surface of each honeycomb segment. The loading was conducted according to the following procedure.

There were mixed, in a pot mill for 2 hours, a commercial γ-alumina powder (specific surface area: 200 m²/g), an aqueous (NH₃)₂Pt (NO₂)₂ solution and a ceria powder.
To the resulting (platinum + ceria)-containing γ-alumina powder were added a commercial alumina sol and water and the resulting mixture was subjected to wet grinding in a pot mill for 10 hours, to prepare a catalyst solution (a slurry for wash coating). Each honeycomb segment was dipped in this catalyst solution, whereby catalyst coating was conducted in a loaded catalyst amount of 50 g/liter.

The oxygen content in the "Analysis of oxygen content" column of Table 1 was measured by an inert gas melting-infrared absorption method based on "Methods for chemical analysis of fine silicon carbide powders for fine ceramics" of JIS R 1616. The measurement was conducted using an oxygen analyzer [EGAW-650W (trade name), a product of HORIBA, Ltd.].

The "oxidation test" shown in Table 1 was conducted by an oxidation test under low oxygen partial pressure. That is, the silicon carbide-based catalyst body obtained was kept at 1,200°C for 10 minutes in an electric furnace in a low oxygen partial pressure atmosphere of (oxygen 1% by volume + Ar gas), and its appearance change and mass change (%) (weight increase by oxidation) were examined.

As shown in Table 1, Examples 1 to 19, as compared with Comparative Examples 1,2, 4 and 5, gave good results of suppression of violent oxidation. In Comparative Example 3, the amount of film (oxide) was too large and the porosity (%) was low [when the base material A was used, the porosity was low at 47% in Comparative Example 3, while the porosity was 51% or 52% in other cases], resulting in large pressure loss.

**Table 1**

| | Base Material | Addition to raw material(s) | Pre- coating | Heat treatment step | Heat treatment conditions (temp. and time) | Poro- sity (%) | Analysis of oxygen content (mass %) | Appearance change in oxidation test | Mass change in oxidation test (%) |
|---|---|---|---|---|---|---|---|---|---|
| Ex. 1 | A | | | After firing | 1000°C × 6 hr | 52 | 2.0 | No change | 0.2 |
| Ex. 2 | A | | | After firing | 1200°C × 3 hr | 52 | 2.5 | No change | 0.2 |
| Ex. 3 | A | | | After firing | 1300°C × 3 hr | 52 | 4.0 | No change | 0.1 |
| Ex. 4 | A | | | After firing | 1400°C × 3 hr | 51 | 6.0 | No change | 0.1 |
| Ex. 5 | A | | | After firing | 1500°C × 3 hr | 51 | 8.0 | No change | 0.1 |
| Ex. 6 | A | | | After firing | 1500°C × 5 hr | 51 | 10.0 | No change | 0.1 |
| Ex. 7 | A | | ZrO₂ | After firing | 1200°C × 3 hr | 52 | 2.0 | No change | 0.2 |
| Ex. 8 | A | | ZrO₂ | After firing | 1300°C × 3 hr | 52 | 3.5 | No change | 0.1 |
| Ex. 9 | A | | Al₂O₃ | After firing | 1200°C × 3 hr | 52 | 2.1 | No change | 0.2 |
| Ex. 10 | A | ZrO₂. | | After firing | 1200°C × 3 hr | 52 | 2.0 | No change | 0.2 |
| Ex. 11 | A | ZrO₂ | | After firing | 1300°C × 3 hr | 52 | 3.5 | No change | 0.1 |
| Ex. 12 | A | Al₂O₃ | | After firing | 1200°C × 3 hr | 52 | 2.0 | No change | 0.2 |
| Ex. 13 | A | | | After debinding | 600°C × 2 hr | 52 | 3.0 | No change | 0.2 |
| Ex. 14 | A | | | After debinding | 800°C × 2 hr | 52 | 4.0 | No change | 0.1 |
| Ex. 15 | A | | | After firing | Steam blowing 1100°C × 3 hr | 52 | 3.0 | No change | 0.2 |
| Ex. 16 | A | | | After firing | Burner combustion 1200°C × 5 hr | 52 | 4.0 | No change | 0.1 |
| Ex. 17 | A | | | After firing | Burner combustion 1250°C × 3 hr | 52 | 4.0 | No change | 0.1 |
| Ex. 18 | B | | | After firing | 1000°C × 3 hr | 42 | 2.0 | No change | 0.2 |
| Ex. 19 | B | | | After firing | 1200°C × 3 hr | 42 | 2.1 | No change | 0.2 |
| Comp. Ex. 1 | A | | | No heat treatment | - | 52 | 1.0 | Whitening | 3.1 |
| Comp. Ex. 2 | A | | | After firing | 600°C × 3 hr | 52 | 1.5 | Whitening | 2.8 |
| Comp. Ex. 3 | A | | | After firing | 1500°C × 12 hr | 47 | 15.0 | No change | 0.1 |
| Comp. Ex. 4 | A | | | After debinding | 300°C × 3 hr | 52 | 1.5 | whitening | 3.0 |
| Comp. Ex. 5 | B | | | No heat treatment | - | 42 | 0.5 | whitening | 3.1 |

### Industrial Applicability

The silicon carbide-based catalyst body of the present invention is excellent in heat resistance, durability, etc. and, therefore, is suitably used in purifiers employed in various industries, such as DPF (diesel particulate filter) for purification of particulates-containing exhaust gas emitted from diesel engine.

## Claims

1. A silicon carbide-based catalyst body comprising:
a porous honeycomb structure wherein silicon carbide particles as the aggregate thereof are bonded to one another with pores held among them, and
a catalyst loaded on the surface of the porous honeycomb structure, containing alumina and ceria as main components,
**characterized in that** the catalyst is loaded on the surface of the porous honeycomb structure via a film comprising a silicon-containing oxide and that the film contains oxygen in an amount of 2 to 10% by mass of the total elements constituting the porous honeycomb structure.

2. A silicon carbide-based catalyst body according to Claim 1, wherein the film contains alumina and/or zirconia as the element (elements) thereof.

3. A silicon carbide-based catalyst body according to Claim 1 or 2, **characterized in that** the film contains, as the crystalline phase thereof, at least one member selected from the group consisting of cristobalite, zircon and mullite.

4. A silicon carbide-based catalyst body according to any of Claims 1 to 3, **characterized in that** the silicon carbide particles are bonded by metallic silicon as the binder thereof.

5. A method for preparing a silicon carbide-based catalyst body, **characterized by** extruding a raw material containing silicon carbide particles to obtain a honeycomb structure, firing the honeycomb structure, then subjecting the fired honeycomb structure to a heat treatment in an oxygen-containing atmosphere to obtain a porous honeycomb structure, and loading, on the surface of the porous honeycomb structure, a catalyst containing alumina and ceria as main components.

6. A method for preparing a silicon carbide-based catalyst body according to Claim 5, wherein the heat treatment is conducted in an atmosphere containing oxygen and steam.

7. A method for preparing a silicon carbide-based catalyst body according to Claim 5 or 6, wherein the heat treatment is conducted by burner combustion and heating using natural gas as a fuel.

8. A method for preparing a silicon carbide-based catalyst body according to any of Claims 5 to 7, wherein the heat treatment is conducted at a temperature of 800 to 1,400°C.

9. A method for preparing a silicon carbide-based catalyst body, **characterized by** extruding a raw material containing silicon carbide particles to obtain a honeycomb structure, subjecting the honeycomb structure to binder removal and then to a heat treatment, in an oxygen-containing atmosphere, then firing the resulting honeycomb structure to obtain a porous honeycomb structure, and loading, on the surface of the porous honeycomb structure, a catalyst containing alumina and ceria as main components.

10. A method for preparing a silicon carbide-based catalyst body according to Claim 9, wherein the heat treatment is conducted at a temperature of 400 to 1,000°C.
